# EUROPÄISCHE PATENTANMELDUNG

(11) **EP 2 840 267 A1**
(43) Veröffentlichungstag der Anmeldung: **25.02.2015**
(21) Anmeldenummer: 13181437.8
(22) Anmeldetag: 23.08.2013
(51) Int. Cl.: F16C 32/06, F16C 33/10, F16C 17/03, F16C 17/06

(54) **Gleitlager**

(71) Anmelder: Siemens Aktiengesellschaft, 80333 München (DE)
(72) Erfinder: Böckel, Frank, 53773 Hennef (DE); Zimmermann, Adam, 45478 Mülheim a.d. Ruhr (DE)

(57) **Zusammenfassung**

Die Erfindung betrifft ein Radialkippsegmentlager, wobei als Lagermedium eine elektrorheologische Flüssigkeit verwendet wird, deren Viskosität sich während des Betriebes durch Anlegen einer elektrischen Spannung verändern lässt.

## Beschreibung

Die Erfindung betrifft ein Lager umfassend eine Lagermediumzuführung zum Zuführen von Lagermedium und ein Lagermedium.

Lager, insbesondere Gleitlager können als Radialkippsegmentlager ausgebildet sein, um Rotoren mit einer vergleichsweise hohen Masse in einer zeitlich und örtlich stabilen Position zu halten. Die Radialkippsegmentlager umfassen im Wesentlichen drei Kippsegmente, die unter einer symmetrischen Anordnung zu einem Rotor ein Drucköl zwischen dem Kippsegment und dem Rotor versorgt. Für die interne Ölversorgung wird eine Direkteinspritzung verwendet, die durch feststehende Düsen erfolgt. In alternativen Ausführungsformen erfolgt die Ölversorgung als Direktversorgung über Ölräume innerhalb des Kippsegments ausgehend von einem mit Drucköl gefüllten Ringraum. Je nach technischen Bedingungen muss das Öl eine bestimmte Viskosität und darüber hinaus physikalische Parameter aufweisen, um eine möglichst gute Gleitlagerung zu realisieren. Dazu werden bei der Ölversorgung entsprechende Blenden verwendet, die innerhalb des Lagers angeordnet sind und den Durchfluss steuern, wodurch die tribologischen Eigenschaften des Öls verändert werden.

Allerdings kann die Ölversorgung der einzelnen Kippsegmente über den Druck und das Ölvolumen definiert werden und nur bei Stillstand geändert werden. Dies führt dazu, dass im Falle der Lagerung eines Rotors für eine Dampfturbine die entsprechende Dampfturbine abgeschaltet werden muss, was dazu führen kann, dass dann das entsprechende Kraftwerk insgesamt vom Netz gehen müsste, was insbesondere bei Kernkraftwerken zu erheblichen zeitlichen und somit finanziellen Auswirkungen führen kann.

Wünschenswert wäre es eine Möglichkeit zu haben, die tribologischen Eigenschaften während des Betriebs zu ändern.

An dieser Stelle setzt die Erfindung an. Aufgabe der Erfindung ist es, ein Lager anzugeben, dessen Eigenschaften verändert werden können.

Gelöst wird dies durch ein Lager umfassend eine Lagermediumzuführung zum Zuführen von Lagermedium und ein Lagermedium, wobei das Lagermedium eine elektrorheologische Flüssigkeit ist.

Somit werden erfindungsgemäß die Eigenschaften von elektrorheologischen Flüssigkeiten zur Anwendung gebracht. Dies sind Flüssigkeiten, die die physikalische Eigenschaft besitzen, beim Anlegen einer elektrischen Spannung die Viskosität zu ändern. Dadurch kann sich der Flusswiderstand der Flüssigkeit verändern. Diese Eigenschaft wird nun erfindungsgemäß dahingehend ausgenutzt, dass zwischen dem einen zu lagernden Rotor und dem Lager das Lagermedium angeordnet ist und während des Betriebes die Viskosität der elektrorheologischen Flüssigkeit verändert werden kann. Somit muss ein Kraftwerk, das mit einer entsprechenden Dampfturbine mit dem erfindungsgemäßen Lager ausgebildet ist nicht zwingend abgeschaltet werden. Die Eigenschaften des Lagers können während des Betriebes verändert werden.

Vorteilhafte Weiterbildungen sind in den Unteransprüchen angegeben.

So wird in einer ersten vorteilhaften Weiterbildung das Lager mit einer Einrichtung zum Regeln der Viskosität der elektrorheologischen Flüssigkeit ausgebildet. Dabei umfasst die Einrichtung ein elektrisches Spannungsgerät zum Anlegen einer elektrischen Spannung.

Somit kann durch einfaches Verändern der elektrischen Spannung direkt die Viskosität der elektrorheologischen Flüssigkeit verändert werden. Die Folge ist, dass die Viskosität der elektrorheologischen Flüssigkeit sich während des Betriebes ändern lässt.

Vorteilhafter Weise liefert das Spannungsgerät eine elektrische Gleichspannung.

Vorteilhafter Weise wird das Lager als Radialkippsegmentlager ausgebildet. Solche Radialkippsegmentlager umfassen im Wesentlichen drei Radialkippsegmente, wobei zwischen jeweils einem Radialkippsegment und dem Rotor eine elektrorheologische Flüssigkeit als Lagermedium verwendet wird.

Die Erfindung wird nun anhand eines Ausführungsbeispiels näher erläutert. Die Figuren zeigen ein Ausführungsbeispiel in schematischer Weise.

Es zeigen:
- Figur 1: eine Querschnittansicht eines erfindungsgemäßen Radialkippsegmentlagers,
- Figur 2: eine perspektivische Darstellung des erfindungsgemäßen Lagermediums.

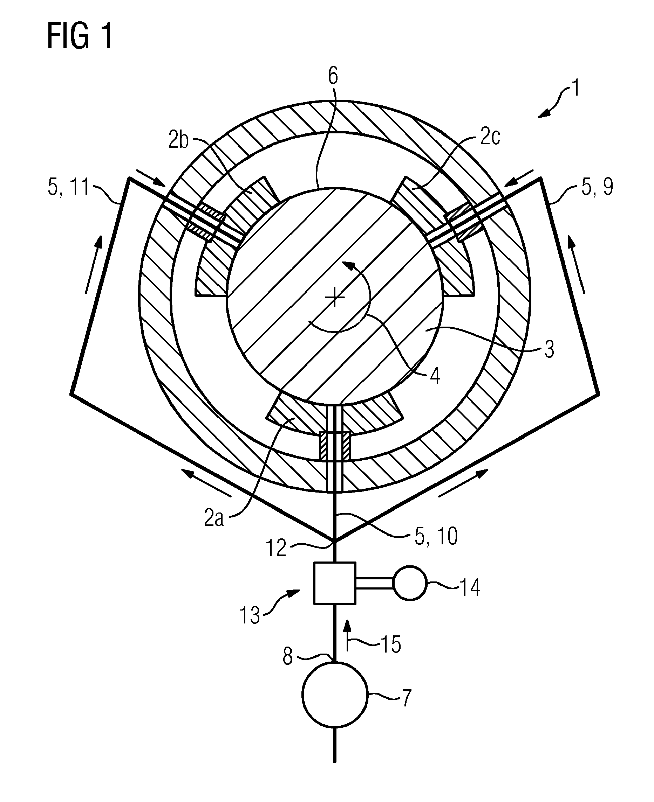

Die Figur 1 zeigt in einer Querschnittansicht ein Radialkippsegmentlager 1. Solch ein Radialkippsegmentlager 1 umfasst im Wesentlichen drei Radialkippsegmente 2a, 2b und 2c. Das Radialkippsegment 2a ist hierbei zum Lagern eines Rotors 3 ausgebildet und in der 6-Uhr-Position angeordnet. Das Radialkippsegment 2b ist aus Symmetriegründen um 120° gegenüber dem Radialkippsegment 2a in einer Rotationsrichtung 4 angeordnet. Die Rotationsrichtung 4 zeigt hierbei gegen den Uhrzeigersinn.

Selbstverständlich kann das Lager auch für einen Rotor 3 ausgebildet werden, der im Uhrzeigersinn dreht. Der Rotor 3 kann beispielsweise der Rotor einer Dampfturbine oder einer Gasturbine sein. Ebenso kann der Rotor 3 für einen Generator oder einen Verdichter verwendet werden.

Das Radialkippsegmentlager 1 umfasst eine Lagermediumzuführung 5, die zum Zuführen von Lagermedium ausgebildet ist. Die Lagermediumzuführung 5 ist hierbei derart ausgebildet, dass durch jeweils ein Radialkippsegment 2a, 2b und 2c eine strömungstechnische Verbindung zwischen einem Lagermediumfilm auf der Oberfläche 6 des Rotors 3 und eines Lagermediumsbehälters entsteht. Durch eine ständige Versorgung der Radialkippsegmente 2a, 2b oder 2c mit Lagermedium aus dem Lagermediumbehälter 7 entsteht ein Lagermediumfilm auf der Oberfläche 6 des Rotors 3, was zu guten Gleitwirkungen führt.

Der Lagermediumbehälter 7 umfasst dabei einen Leitungsausgang 8, der in eine erste Leitung 9, eine zweite Leitung 10 und eine dritte Leitung 11 verzweigt. Die erste Leitung 9, zweite Leitung 10 und die dritte Leitung 11 sind hierbei derart ausgebildet, dass ein Sternpunkt 12 zum Leitungsausgang 8 entsteht. Das Lagermedium ist eine elektrorheologische Flüssigkeit, die die Eigenschaft besitzt, durch Anlegen einer elektrischen Spannung deren Viskosität zu ändern. Daher wird das Radialkippsegmentlager 1 mit einer Einrichtung 13 zum Regeln der Viskosität der elektrischen Flüssigkeit ausgebildet. Die Einrichtung 13 umfasst hierbei ein elektrisches Spannungsgerät 14 zum Anlegen einer elektrischen Spannung. Die Einrichtung 13 ist hierbei um den Leitungsausgang 8 angeordnet, durch den die elektrorheologische Flüssigkeit strömt. Die elektrorheologische Flüssigkeit strömt hierbei vom Lagermediumbehälter in einer Strömungsrichtung 15 zur Einrichtung 13 und von dort zum Sternpunkt 12. Das bedeutet, dass die elektrorheologische Flüssigkeit vor der Einrichtung 13 andere physikalische Eigenschaften aufweist als nach dem Durchströmen der Einrichtung 13. Dies kann somit ausgenutzt werden, um während des Betriebes durch Anlegen einer elektrischen Spannung am Spannungsgerät 14 zur Einrichtung 13, wodurch die elektrorheologische Eigenschaft des Lagermediums verändert wird. Die Eigenschaften des Radialkippsegmentlagers 1 kann dadurch während des Betriebes verändert werden.

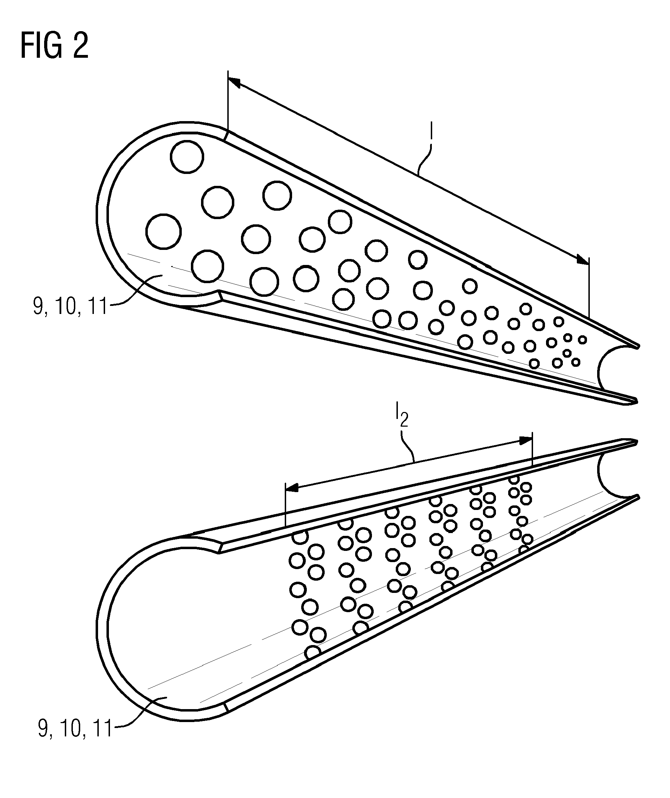

Die Figur 2 zeigt in einer schematischen Ansicht eine elektrorheologische Flüssigkeit in der ersten Leitung 9, zweiten Leitung 10 und/oder dritten Leitung 11. Dargestellt ist in der oberen Leitungsdarstellung die elektrorheologische Flüssigkeit ohne Anlegen einer Spannung. Man sieht ganz deutlich, dass die durch kleine Kugeln dargestellte elektrorheologische Flüssigkeit eine homogene Dichteverteilung über eine Länge 1 aufweist. Die Kugeln weisen hierbei äquidistante Abstände zueinander auf.

In der unteren Darstellung der Figur 2 ist die erste Leitung 9, die zweite Leitung 10 und/oder die dritte Leitung 11 mit einer elektrorheologischen Flüssigkeit bei einer angelegten Spannung dargestellt, was durch das Plus- und das Minuszeichen symbolisiert wird. Deutlich ist zu sehen, dass die Anordnung der Kugeln der elektrorheologischen Flüssigkeit sich verändert hat. Zum einen ist die Dichteverteilung der Kugeln derart verändert, dass die Kugeln auf einer Länge l₂ nunmehr angeordnet sind gegenüber vorher der Länge 1, was ohne elektrische Spannung erfolgte.
Es gilt: l₂ < l.

Dadurch verändert sich zwingend die Viskosität der elektrorheologischen Flüssigkeit und wird hier verwendet um die Lagereigenschaften des Radialkippsegmentlagers 1 zu verändern.

## Patentansprüche

1. Lager (1) umfassend:
eine Lagermediumzuführung (5) zum Zuführen von Lagermedium und ein Lagermedium,
**dadurch gekennzeichnet, dass**
das Lagermedium eine elektrorheologische Flüssigkeit ist.

2. Lager (1) nach Anspruch 1,
mit einer Einrichtung (13) zum Regeln der Viskosität der elektrorheologischen Flüssigkeit.

3. Lager (1) nach Anspruch 2,
wobei die Einrichtung (13) ein elektrisches Spannungsgerät (14) zum Anlegen einer elektrischen Spannung umfasst.

4. Lager (1) nach Anspruch 3,
wobei das Spannungsgerät (14) eine elektrische Gleichspannung liefert.

5. Lager (1) nach einem der vorhergehenden Ansprüche, wobei das Lager (1) als Radialkippsegmentlager ausgebildet ist.
